(19) Europäisches Patentamt
European Patent Office
Office européen des brevets

(11) **EP 4 633 021 A1**

(12) **EUROPEAN PATENT APPLICATION**

(43) Date of publication:
**15.10.2025 Bulletin 2025/42**

(21) Application number: **25163304.6**

(22) Date of filing: **12.03.2025**

(51) International Patent Classification (IPC):
**H02M 1/12** (2006.01)     **H02M 1/14** (2006.01)
**H02M 1/15** (2006.01)     **H02M 7/06** (2006.01)
**H02M 7/10** (2006.01)

(52) Cooperative Patent Classification (CPC):
**H02M 1/12; H02M 1/14; H02M 1/15; H02M 7/06;
H02M 7/10;** H02M 7/4835

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.04.2024 GB 202404972**

(71) Applicant: **Rolls-Royce plc
London N1 9FX (GB)**

(72) Inventors:
• **Briff, Pablo
Derby, DE24 8BJ (GB)**
• **Trainer, David
Derby, DE24 8BJ (GB)**
• **Boden, Mark
Derby, DE24 8BJ (GB)**
• **Sweet, Mark
Derby, DE24 8BJ (GB)**

(74) Representative: **Rolls-Royce plc
P.O. Box 31
IP Department (SinA-48)
Derby Derbyshire DE24 8BJ (GB)**

(54) **ELECTRICAL POWER SYSTEM**

(57)     An electrical power system 10, comprising: a rotary electrical machine 12 configured to output AC; a diode-bridge rectifier 13 having an AC input connected to the electrical machine 12 and a DC output (DC+, DC-); an active filter circuit 14 comprising a plurality of power semiconductor switches $141_{L-H}$, $142_{L-H}$ connected in a bridge configuration between first and second output terminals $14_{out}$, the first and second output terminals $14_{out}$ connected to the DC output (DC+, DC-) of the diode-bridge rectifier 13; and a controller 15 configured to control a switching operation of the plurality of power semiconductor switches $141_{L-H}$, $142_{L-H}$ of the active filter circuit 14 to control an output voltage $V_{filt}$ across the first and second output terminals $14_{out}$ of the active filter circuit 14.

FIG. 1

EP 4 633 021 A1

**Description**

**TECHNICAL FIELD**

The present disclosure concerns an electrical power system and an aircraft comprising an electrical power system.

**BACKGROUND**

Aircraft and their power and propulsion systems are becoming increasingly electric in their design. Compared with traditional aircraft, electric aircraft, hybrid-electric aircraft and so-called 'more electric' aircraft have higher levels of electrical power demand. They meet this demand through on-board generation (e.g., electrical generators coupled to spools of gas turbine engines) and/or on-board energy storage systems (e.g., batteries).

Electrical power may be distributed to loads through one or more DC electrical networks. Where an electrical generator provides electrical power, a rectifier (i.e., an AC:DC power converter) may provide an interface between the AC supplied by the generator and the DC electrical network.

Many rectifiers are active devices, i.e., they include controllable power semiconductor switches such as MOSFETs or IGBTs. An advantage of active devices is that they are capable of producing a high-quality DC output with relatively low harmonic content, however this comes with additional system cost and complexity. An alternative approach is to use a passive device such as diode-bridge rectifier. A diode-bridge rectifier does not require control to rectify the AC input to a DC output, but the quality of the DC output will be lower than that achievable with an active device.

The lower quality of the DC voltage output may be somewhat mitigated using first- and/or second-order voltage filters in the form of resistors, inductors, and capacitors (R-L-C). However, these components may be bulky and lossy, and the resulting filters are often optimized for only a narrow range of operating parameters. When the additional mass and losses are taken into account, the advantage of reduced cost and complexity may be insufficient to make the use of a diode-bridge rectifier a preferred approach.

**SUMMARY**

According to a first aspect, there is an electrical power system, comprising:

> a rotary electrical machine configured to output AC;
> a diode-bridge rectifier having an AC input connected to the electrical machine and a DC output;
> an active filter circuit comprising a plurality of power semiconductor switches connected in a bridge configuration between first and second output terminals, the first and second output terminals connected to the DC output of the diode-bridge rectifier; and
> a controller configured to control a switching operation of the plurality of power semiconductor switches of the active filter circuit to control an output voltage across the first and second output terminals of the active filter circuit.

The rotary electrical machine may have an integer number $R \geq 3$ of phases and the diode-bridge rectifier may be an R-phase full-wave diode-bridge rectifier.

The rotary electrical machine may be configured to output an R-phase trapezoidal or quasi-trapezoidal voltage.

The rotary electrical machine may comprise R-phase stator windings connected in a star- or delta- configuration.

The rotary electrical machine has an integer number $R \geq 3$ of phases and the diode-bridge rectifier may comprise R single-phase full-wave diode-bridge rectifier circuits connected in series at their DC sides, an AC input of the r-th single-phase full-wave diode-bridge rectifier circuit being connected to an r-th phase of the electrical machine.

The number of phases, R, may be equal to three and the diode-bridge rectifier may comprise: a first single-phase full-wave diode-bridge rectifier circuit having an AC input connected to a first phase of the electrical machine and having first and second DC terminals, the first DC terminal forming a first DC output of the diode-bridge rectifier; a second single-phase full-wave diode-bridge rectifier circuit having an AC input connected to a second phase of the electrical machine and having third and fourth DC terminals, the third DC terminal connected to the second DC terminal of the first single-phase full-wave diode-bridge rectifier circuit; and a third single-phase full-wave diode-bridge rectifier circuit having an AC input connected to a third phase of the electrical machine and having fifth and sixth DC terminals, the fifth DC terminal connected to the fourth DC terminal of the second single-phase diode-bridge rectifier, and the sixth DC terminal forming the second DC output of the diode-bridge rectifier.

Each of the R phases of the rotary electrical machine may be configured to output a one-phase trapezoidal or quasi-trapezoidal voltage.

The rotary electrical machine may comprise R isolated single-phase stator windings.

The electrical power system may further comprise a voltage sensor configured to measure a voltage across the DC output of the diode-bridge rectifier and to provide the measured voltage to the controller. The controller may be configured to: identify one or more harmonics to be filtered; determine, from the measured voltage, an output voltage for filtering the one or more harmonics; and control the switching operation of the plurality of power semiconductor switches of the active filter circuit so that the output voltage across the first and second output terminals of the active filter circuit is equal to the determined output voltage.

Determining the output voltage for filtering the one or more harmonics may comprise: determining, from the measured voltage, a harmonic content for each of the one or more harmonics; and determining, based on the harmonic content of the one or more harmonics, the voltage output for filtering the one or more harmonics.

Determining the harmonic content for each of the one or harmonics may comprise: transforming the measured voltage from a time domain into a frequency domain and determining, for each of the harmonics, an amplitude and phase at a frequency of the harmonic. The time to frequency domain transformation may be a Fourier Transform (e.g., an FFT), a Goertzel Algorithm or another transformation.

Determining the voltage output for filtering the one or more harmonics may comprise summing, for each of the one or more harmonics that are to be filtered:

$$v_i = A_i \cos(\omega_i t + \phi_i)$$

where $v_i$ is a contribution to the output voltage from the i-th harmonic to be filtered, $A_i$ is the amplitude of the i-th harmonic, $\omega_i$ is an angular frequency of the i-th harmonic and $\phi_i$ is the phase of the i-th harmonic.

Identifying the one or more harmonics to be filtered may comprise: identifying one or more pre-defined harmonic frequencies in a look-up table; or identifying one or more harmonic frequencies from the voltage measurement.

The one or more harmonics may include one or more harmonics having a frequency, f, satisfying $f = 6n*f_0$, wherein n is an integer and $f_0$ is a fundamental frequency of the AC output of the rotary electrical machine.

The active filter circuit may comprise a plurality of active bridge circuits connected in parallel between the first and second output terminals, each of the plurality of active bridge circuits comprising a plurality of power semiconductor switches. The controller may be configured to control a switching operation of the plurality of power semiconductor switches of each of the active bridge circuits and thereby control the output voltage across the first and second output terminals of the active filter circuit.

The controller may be configured to time-interleave the switching operation of the plurality of active bridge circuits of the active filter circuit.

The plurality of active bridge circuits of the active filter circuit comprises P groups of Q active bridge circuits, P and Q being integers greater than one; and the controller may be configured to temporally synchronize the switching operation of the Q active bridge circuits of each group and time-interleave the switching operation of the P groups.

The active filter circuit may comprise a plurality of series-connected active bridge circuits, each of the plurality of series-connected active bridge circuits comprising a plurality of power semiconductor switches; and the controller may be configured to control a switching operation of the plurality of power semiconductor switches of each of the plurality of series-connected active bridge circuits and thereby control the output the output voltage across the first and second output terminals of the active filter circuit.

The active filter circuit may comprise a plurality of series-connected cells, each cell of the plurality of series-connecting cells comprising a plurality of parallel-connected active bridge circuits, each of the plurality active bridge circuits comprising a plurality of power semiconductor switches. The controller may be configured to control a switching operation of the plurality of power semiconductor switches of each of the plurality of active bridge circuits and thereby control the output voltage across the first and second output terminals of the active filter circuit.

The rotary electrical machine may comprise a rotor and a stator provided within a casing, and the diode-bridge rectifier may be connected to windings of the stator within the casing.

The electrical power system may further comprise a DC electrical network connected to the DC output of the diode-bridge rectifier.

According to a second aspect, there is an aircraft comprising the electrical power system of the first aspect.

The skilled person will appreciate that, except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

**FIG. 1** is a schematic illustration of an electrical power system comprising a diode-bridge rectifier and an active filter circuit;

**FIG. 2** illustrates a 3-phase full-wave diode-bridge rectifier;

**FIG. 3** illustrates an active filter circuit;

**FIG. 4** is a series of charts illustrating the harmonic content in the waveform output by an electrical machine and diode-bridge rectifier;

**FIG. 5** is a flow chart illustrating how a suitable voltage output for an active filter circuit may be determined;

**FIG. 6** is a series of charts illustrating the harmonic content after filtering by an active filter circuit;

**FIG. 7A** illustrates a one-phase full-wave diode-bridge rectifier;

**FIG. 7B** is a schematic illustration of an electrical power system comprising a series diode-bridge rectifier and an active filter circuit;

**FIG. 8** a series of charts illustrating the harmonic content in the waveform output by an electrical machine and diode-bridge rectifier;

**FIG. 9** is a series of charts illustrating the harmonic content after filtering by an active filter circuit;

**FIG. 10A** is an axial, sectional, view of an electrical machine configured to output a trapezoidal back-emf;

**FIG. 10B** illustrates trapezoidal back-emfs produced by the electrical machine of FIG. 10A;

**FIG. 11A** is a partially schematic side-view of an arrangement comprising an electrical and a diode-bridge rectifier;

**FIG. 11B** is a plan view of the arrangement of FIG. 11A;

**FIG. 12A** is a schematic illustration of an active filter circuit and lumped output impedance;

**FIG. 12B** is a schematic illustration of an active filter circuit that comprises a plurality of parallel-connected active bridge circuits;

**FIG. 12C** is a schematic illustration of an active filter circuit comprising a plurality of series-connected active bridge circuits; and

**FIG. 13** is a plan view of an aircraft.

## DETAILED DESCRIPTION

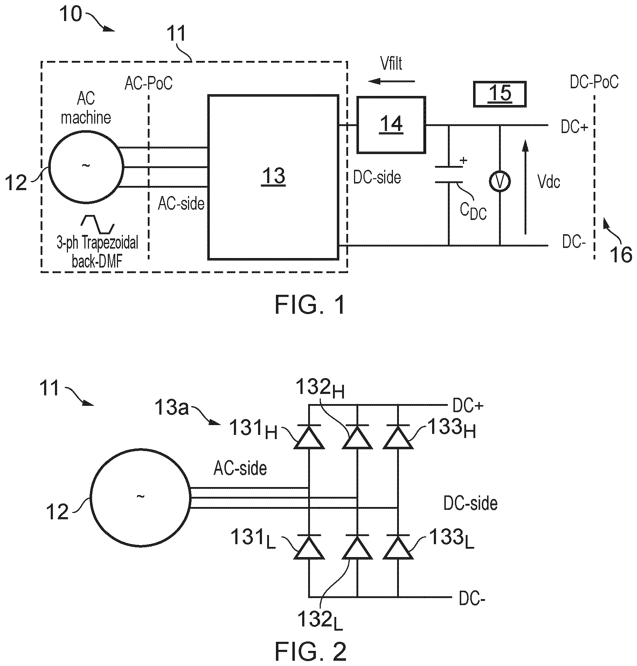

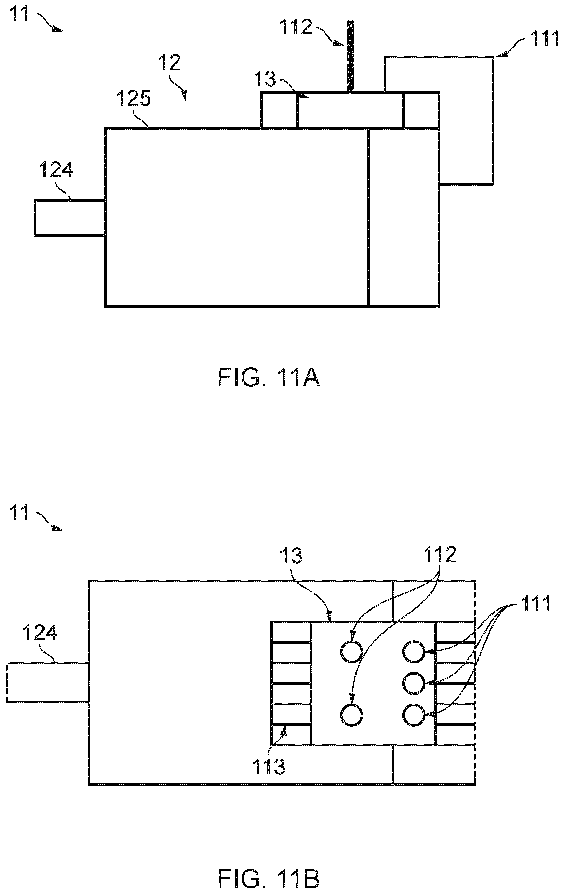

**FIG. 1** illustrates a portion of an electrical power system 10 that includes an electrical machine 12, a diode-bridge rectifier 13 and an active filter circuit 14. The electrical machine 12, in this example shown to be a three-phase machine, is operable as a generator and outputs AC. The diode-bridge rectifier 13 has an AC input side that connects to the stator windings of the electrical machine 12 at an AC Point of Connection (AC-PoC). In the present example, the electrical machine 12 and the diode-bridge rectifier 13 are provided together as an integrated arrangement 11, for example within a common casing. A more detailed example of this will be described with reference to FIGS. 11A-11B.

The diode-bridge rectifier 13 converts the AC input to a DC output, labelled DC+, DC-. A DC link capacitor, $C_{DC}$, is shown to be connected between the DC outputs DC+, DC-, the function of which will be familiar to those skilled in the art. The DC outputs DC+, DC- are connected to, for example, a DC electrical network 16 at the DC Point of Connection (DC-PoC). In other examples, the DC outputs may be connected to an Energy Storage System (ESS), a DC load, or an AC load via a DC:AC converter (*e.g.*, an inverter). The active filter circuit 14, connected in series between the DC output of the rectifier 13 and, *e.g.*, the DC electrical network 16, performs active harmonic filtering to improve the quality of the DC output, as will be described in more detail below.

**FIG. 2** illustrates a first embodiment of the electrical power system 10 of FIG. 1. Here, the electrical machine 12 is a three-phase machine having, *e.g.*, star-or delta-connected windings, and the diode-bridge rectifier 13a is a three-phase full-wave diode-bridge rectifier. Each phase of the electrical machine 12 is connected, at the AC-PoC, to an intermediate node of a half-bridge of the rectifier 13a, each half-bridge comprising two series-connected diodes. In particular, a first phase of the electrical machine is connected to an intermediate node between a high-side diode $131_H$ and a low-side diode $131_L$ of a first half-bridge, a second phase of the electrical machine is connected to an intermediate node between a high-side diode $132_H$ and a low-side diode $132_L$ of a second half-bridge, and a third phase of the electrical machine is connected to an intermediate node between a high-side diode $133_H$ and a low-side diode $133_L$ of a third half-bridge. Each of the three half-bridges is connected between a high-side DC output rail DC+ and a low-side DC output rail DC-.

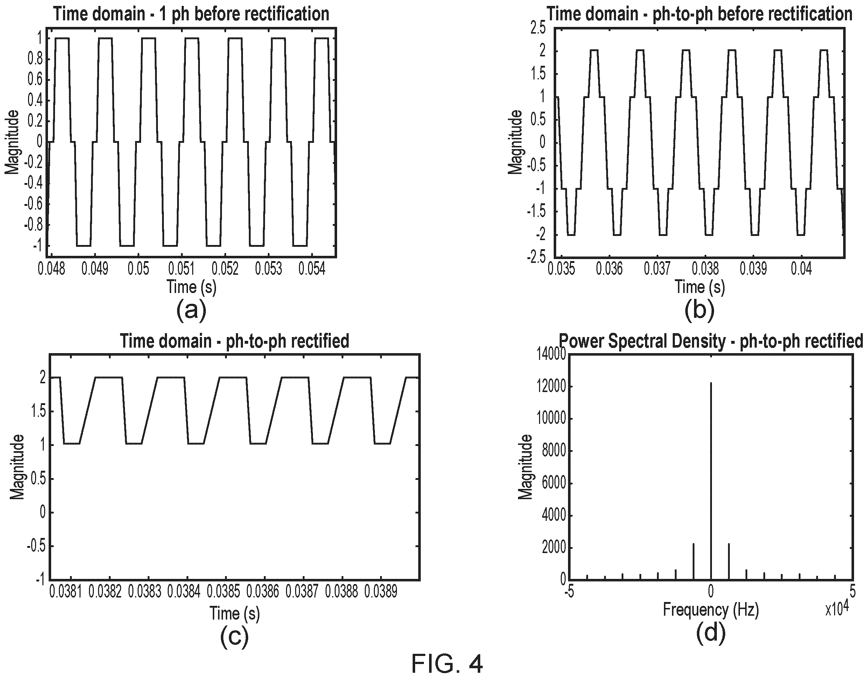

The diodes, which are passive components, rectify the AC output from the electrical machine 12 to a DC output across DC+, DC-. The resulting DC voltage is the time-interleaved rectified phase-to-phase voltage of each of the three phases composing the diode-bridge rectifier 13a. Each phase conducts at different time instants, here for a total conduction period of 120 electrical degrees per electrical cycle, where all phases contribute to form a continuous-time DC voltage. Referring to **FIG. 4**, chart (a) shows the voltage output by one phase of the electrical machine 12, chart (b) shows the phase-to-phase voltage output by the electrical machine 12 and seen by the rectifier 13a, and chart (c) shows the rectified phase-to-phase voltage. The fundamental electrical frequency, $f_0$, is 1 kHz in this example.

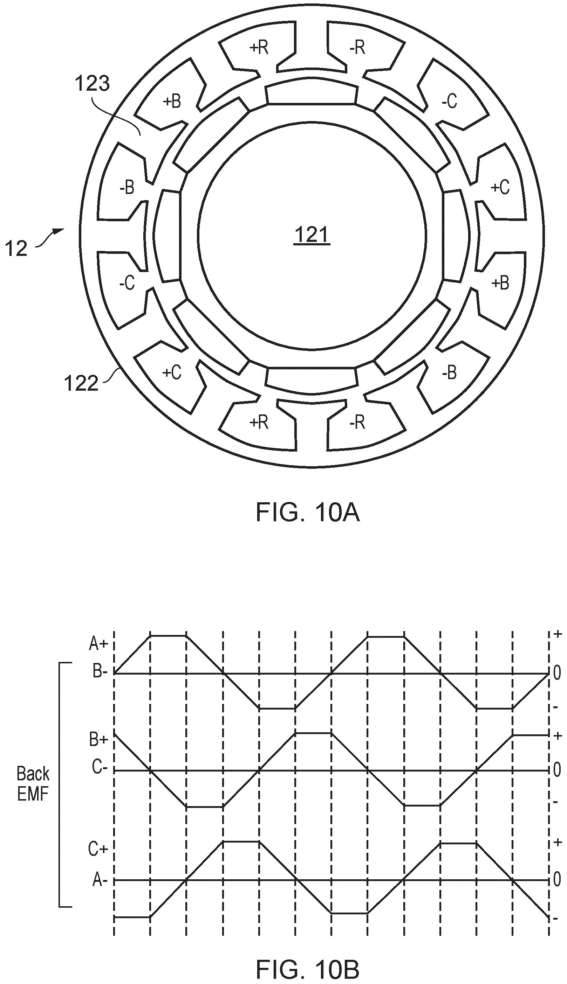

It can be seen from FIG. 4 that the electrical machine 12 produces a quasi-trapezoidal back-emf. While not essential (the back-emf may instead be, *e.g.*, sinusoidal), a trapezoidal or quasi-trapezoidal back-emf may be desirable due to the use of a passive diode rectifier 13a. Unlike an active rectifier with controllable semiconductor switches (e.g., IGBTs or MOSFETs), the diodes $131_{L-H}$, $132_{L-H}$, $133_{L-H}$ of a passive diode rectifier 13a cannot be controlled to flatten the peaks and troughs of the input voltage waveform. With a trapezoidal back-emf, the peaks and troughs are already flat. An electrical machine 12 that outputs a trapezoidal waveform is described below with reference to FIGS 10A-10B, and further examples are provided in European Patent Application Publication EP 4120532 A1, the entire contents of which are incorporated herein by reference.

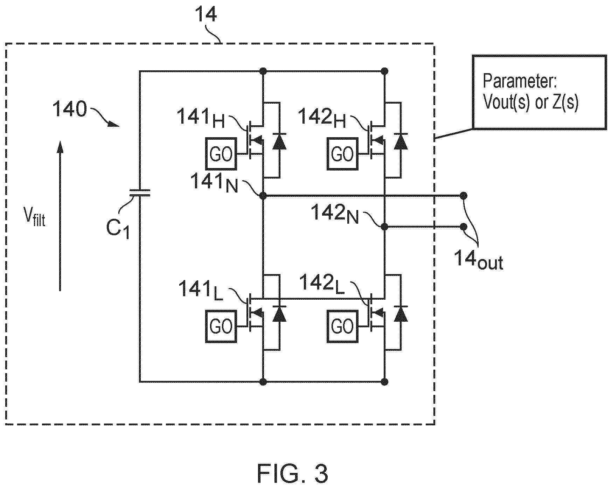

Referring now to chart (d) of FIG. 4, which shows the power spectrum of the rectified phase-to-phase voltage centred at the fundamental electrical frequency $f_0$, due to the non-sinusoidal nature of the back-emf in this example, the resulting DC link voltage has harmonic components at frequencies of $6nf_0$, where n is a positive integer. For $f_0 = 1$ kHz, there are harmonics at 6 kHz, 12 kHz, 18 kHz, etc. These harmonics may be conventionally filtered by a passive filter, typically in the form of resistors, inductors, and capacitors (R-L-C). In accordance with the present disclosure, however, the $6nf_0$ harmonic components are instead filtered by the active filter circuit 14 (see FIG. 1), a first example of which is illustrated in **FIG. 3**.

The active filter circuit 14 comprises an active bridge circuit 140, which in this example is a full-bridge circuit. The full-bridge circuit 140 comprises two half-bridge circuits and a DC capacitor, $C_1$, connected in parallel. Each half-bridge includes a high-side power semiconductor switch $141_H$, $142_H$ connected to a higher voltage DC rail and a low-side power semiconductor switch $141_L$, $142_L$ connected to a lower voltage DC rail. Each half-bridge further includes a respective intermediate AC node $141_N$, $142_N$, which provides a terminal and is where the respective low-side and high-side power semiconductor switches (e.g., $141_L$, $141_H$) of the half-bridge are connected in series. The intermediate node $141_N$ of a first of the half-bridge provides a first output terminal, whilst the intermediate node $142_N$ of a second of the half-bridge provides a second output terminal, a potential difference between which is the output voltage, $V_{out}$.

The power semiconductor switches $141_{L,H}$, $142_{L,H}$ may be MOSFETs, e.g., SiC or GaN MOSFETs, or another type of transistor. The diodes connected in antiparallel with the power semiconductor switches $141_{L,H}$, $142_{L,H}$ may be discrete components or may instead represent the body diode character where the semiconductor switches are MOSFETs. Although a full-bridge circuit is illustrated, other active bridge circuits 140 could be used instead. Examples include half-bridge circuits and H-bridge circuits.

Without loss of generality, it can be said that the active filter circuit 14 emulates an impedance, Z, which can be expressed as:

$$Z(s) = Re[Z(s)] + jIm[Z(s)] \qquad (1)$$

$$s = j \times \omega \qquad (2)$$

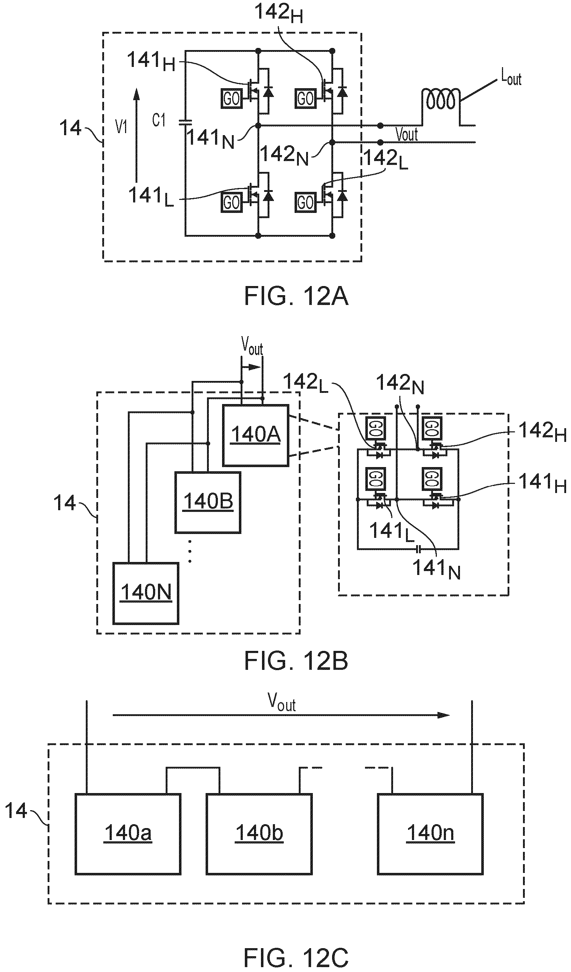

where Re[Z(s)] is the real part of the impedance, Im[Z(s)] is the imaginary part of the impedance, s is the Laplace operator and $\omega$ is the electrical frequency. Generally, each of Re[Z(s)] and *Im*[*Z*(*s*)] may be frequency-dependent or frequency-independent functions of electrical resistance (R), inductance (L) and capacitance (C). Thus, the active filter circuit 14 can emulate an R-L-C filter, and the R-L-C values and the frequency response may be programmatically defined and changed according to the requirements of the system 10. The capability of the active filter circuit 14 (e.g., the range of output voltages it can produce to emulate different impedances) will depend on the capability of the active bridge circuit 140 and the voltage that can be supported by the capacitor, $C_1$. Thus, the capability of the active filter circuit 14 may be increased according to the needs of the system by increasing the capability of the active bridge circuit 140 and the capacitance, as described further herein with reference to FIGS. 12A-C.

Equation 3 relates the output voltage and the current flowing across the active filter circuit 14, in the Laplace domain:

$$V_{out}(s) = Z(s) * I(s) \qquad (3)$$

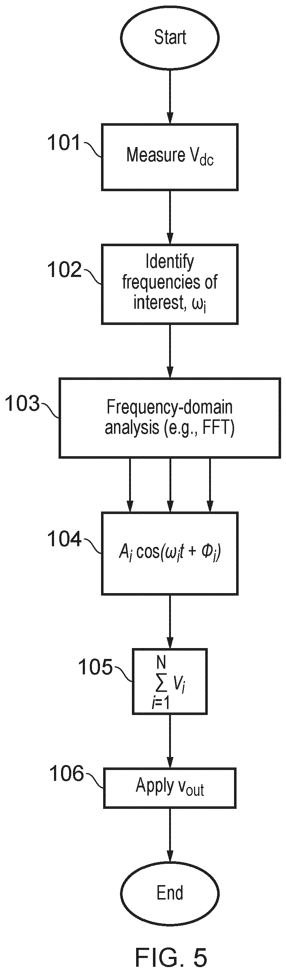

It is important to consider that the filter circuit 14 is not driving the current, I, that flows across it - the current is driven by the external circuit. Instead, the role of the filter circuit 14 is to react to the current by imposing an impedance, Z(s), that has the effect of performing the required harmonic filtering of the current. From this, it can be appreciated that the impedance, and thus the filtering action, provided by the active filter circuit 14 will depend on the output voltage, $V_{out}$, across the output terminals $14_{OUT}$ of the active filter circuit 14. As will be understood by those skilled in the art, $V_{out}$ may be controlled by controlling the switching operation of power semiconductor switches $141_{L-H}$, $142_{L-H}$, for example by selecting and applying a suitable Pulse Width Modulation (PWM) strategy. The PWM scheme may be implemented by a controller 15 that interfaces with the gate drivers ("GD" in FIG. 3). Techniques for deriving PWM schemes for particular output voltages are beyond the scope of the present disclosure but are known to those of ordinary skill in the art. However, FIG. 5 illustrates how an output voltage, $V_{out}$, for providing suitable harmonic filtering may be determined.

At 101, a voltage measurement, $V_{dc}$, is made at the DC-PoC, for example using a voltage sensor as illustrated in FIG. 1. The voltage measurement may be communicated to the controller 15.

At 102, the controller 15 identifies one or more harmonics that are to be filtered (e.g., removed or attenuated) by the active filter circuit 14. In some examples, the harmonics to be filtered may be predefined (for example, they may be one or more of the $6nf_0$ harmonics described above) and stored in memory accessible to the controller 15, e.g., in a look-up table. In other examples, the controller may perform a frequency sweep algorithm, e.g., on the measured voltage, to identify one or more harmonic frequencies of interest.

At 103, the controller 15 performs a frequency-domain analysis of the voltage measurement to quantify the harmonic content at each of the frequencies identified in step 102. For example, the controller 15 may compute a Fast Fourier Transform (FFT) or another similar or suitable transform or algorithm (e.g., Goertzel's Algorithm) and from this estimate the amplitude ($A_i$) and phase ($\phi_i$) at each of the N harmonic frequencies ($\omega_i = 2\pi f_i$) of interest, where N is the total number of harmonics to be filtered.

At 104, for each of the N frequencies of interest, the controller 15 computes a time-domain signal using the amplitude and phase determined at step 104. This may take the form:

$$v_i = A_i \cos(\omega_i t + \phi_i) \tag{4}$$

At 105, the N time-domain signals, $v_i$, of the N harmonics are summed to give a voltage, $V_{filt}$, that can be used as $V_{out}$ to filter the harmonics:

$$v_{out} = v_{filt} = \sum_{i=1}^{N} v_i = \sum_{i=1}^{N} A_i \cos\left(\omega_i t + \emptyset_i\right)$$

$$\tag{5}$$

At 106, having determined $V_{out}$, the controller 15 implements a suitable PWM strategy, through control of the gate drivers of the power semiconductor switches $141_{L,H}$, $142_{L,H}$, so that the output voltage, $v_{out}$, is equal to $v_{filt}$.

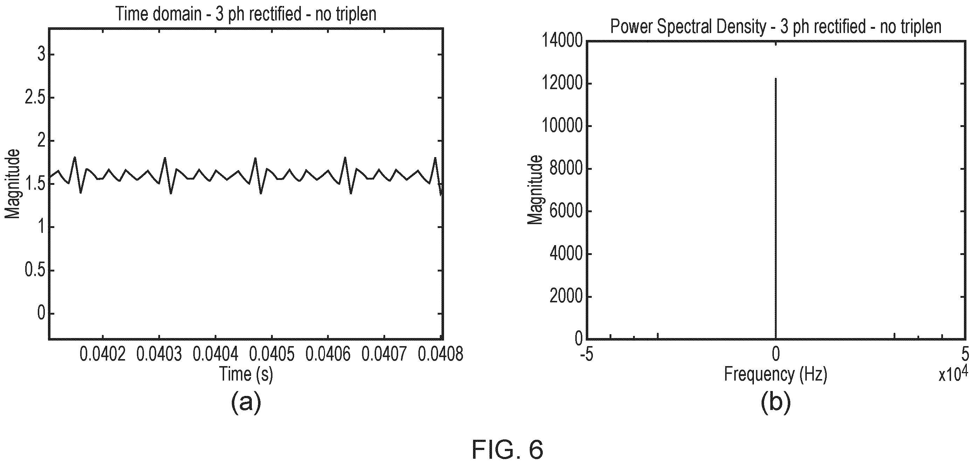

**FIG. 6** illustrates the result of applying the active harmonic filtering to the waveforms of FIG. 4. Chart (a) shows the filtered DC voltage, with the effectiveness of the filtering confirmed by the power spectrum of chart (b) which shows lower harmonic magnitudes at the $6nf_0$ frequencies. Furthermore, compared with the use of passive filters, the active filter circuit 14 may have a reduced size and mass, and its, e.g., frequency response may be programmatically changed as required.

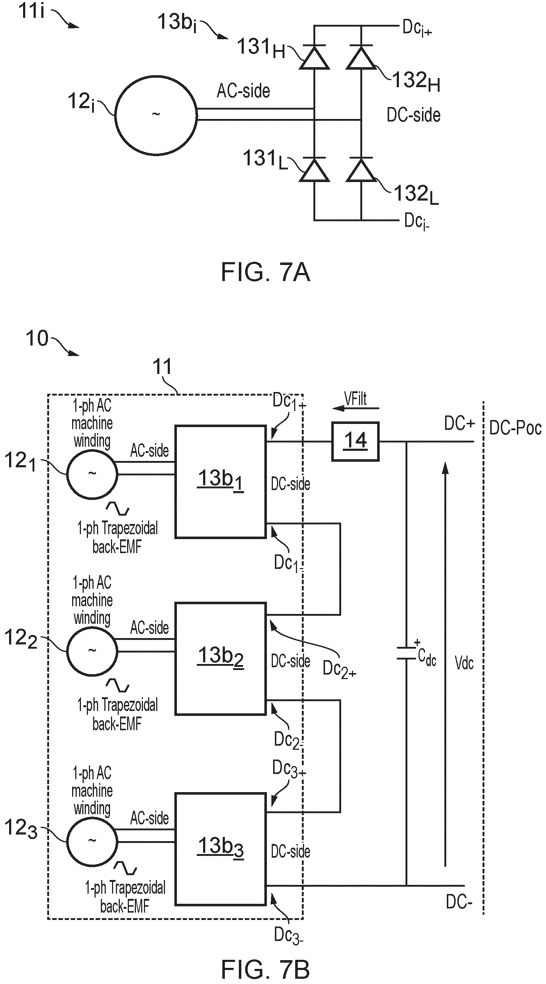

**FIGS. 7A-7B** illustrate a second embodiment of the electrical power system 10 of FIG. 1. Referring first to FIG. 7A, this shows an arrangement $11_i$ comprising a single-phase full-wave diode-bridge rectifier $13b_i$ connected to a single-phase winding $12_i$ of an electrical machine. The single-phase full-wave diode-bridge rectifier $13b_i$ comprises four diodes connected to first and second terminals of the single-phase winding $12_i$ in an H-bridge configuration between first and second DC output terminals $DC_{i+}$ $DC_i$. In particular, a first AC terminal of the single-phase winding $12_i$ connects to an intermediate node between series-connected high- and low-side diodes $131_H$, $131_L$, and a second terminal of the single-phase winding $12_i$ connects to an intermediate node between series-connected high- and low-side diodes $132_H$, $131_L$. Each pair of diodes (e.g., $131_H$, $131_L$) forms a half-bridge connected between a high-side DC output $DC_{i+}$ and a low-side DC output $DC_{i-}$.

FIG. 7B shows an electrical power system 10 comprising three of the arrangements $11_i$ shown in FIG. 7A, connected in series at the DC outputs. In particular, AC terminals of first, second and third single-phase windings $12_1$, $12_2$, $12_3$ are connected to respective first, second and third single-phase full-wave diode-bridge rectifiers $13b_1$, $13b_2$, $13b_3$ in the manner described above. The high-side output $DC_{1+}$ of the first diode-bridge rectifier $13b$, forms the first DC output DC+ of the system 10, whilst the low-side output $DC_{3-}$ of the third diode-bridge rectifier $13b_3$ forms the second DC output DC- of the system 10. The low-side DC output $DC_{1-}$ of the first diode-bridge rectifier $13b$, is connected to the high-side DC output $DC_{2+}$ of the second diode-bridge rectifier $13b_2$. The low-side DC output $DC_{2-}$ of the second diode-bridge rectifier $13b_2$ is connected to the high-side DC output $DC_{3+}$ of the third diode-bridge rectifier $13b_3$.

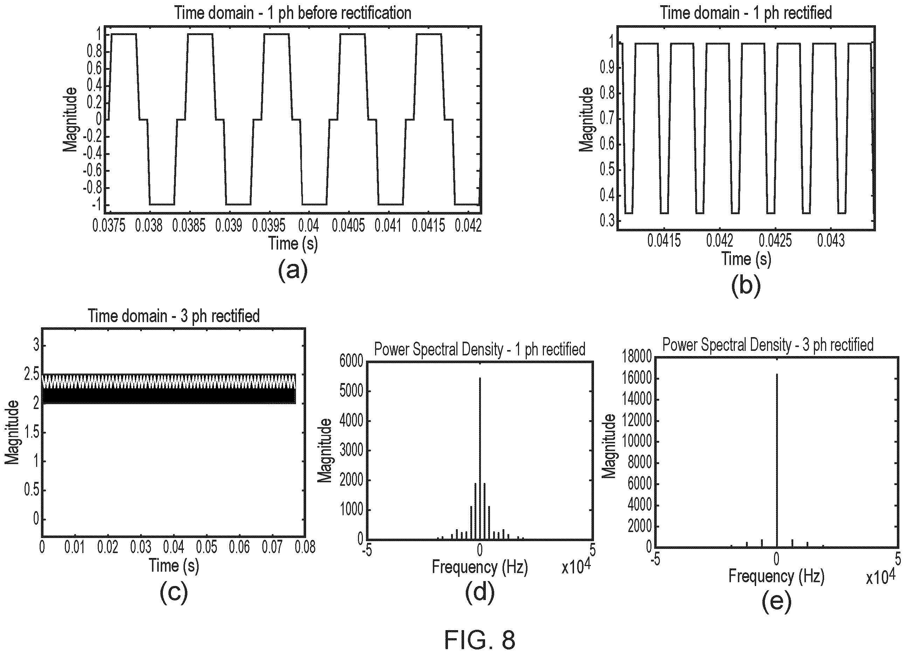

The three single-phase windings $12_1$, $12_2$, $12_3$ may be wound about a common electrical machine stator but, unlike the windings of FIG. 2, are electrically isolated (e.g., they are not connected in a star- or delta-configuration). The resulting DC voltage is the superposition of three single-phase full-wave rectified phase-to-ground voltages, each phase-shifted by 120 electrical degrees with respect to each other. Charts (a) and (b) of FIG. 8 show the 1-phase voltage waveforms before and after rectification, while chart (c) shows the summed three-phase rectified voltage waveform, again using a fundamental electrical frequency, $f_0$, of 1 kHz. As in the previous example, the resulting DC link voltage has $6nf_0$ harmonic components, as can be seen from the power spectrum of chart (e).

Comparing FIG. 2 with FIGS 7A-7B, and comparing FIG. 4 with FIG. 8, there are two clear differences. First, whilst the rectifier 13a of FIG. 2 has only six diodes (i.e., half of that of FIG. 7B), the rectified DC voltage provided by the arrangement of FIG. 2 is approximately $\sqrt{3} \approx 1.73$ times smaller than that of FIG. 7B. Second, the harmonic content in the DC voltage provided by the arrangement of FIG.2 is larger than that provided in FIG. 7B as it does not benefit from the cancellation effect brought about by summing three rectified phases as it is the case in the topology of FIG. 7B. The cancellation effect can be seen by comparison of charts (d) and (e) of FIG. 8.

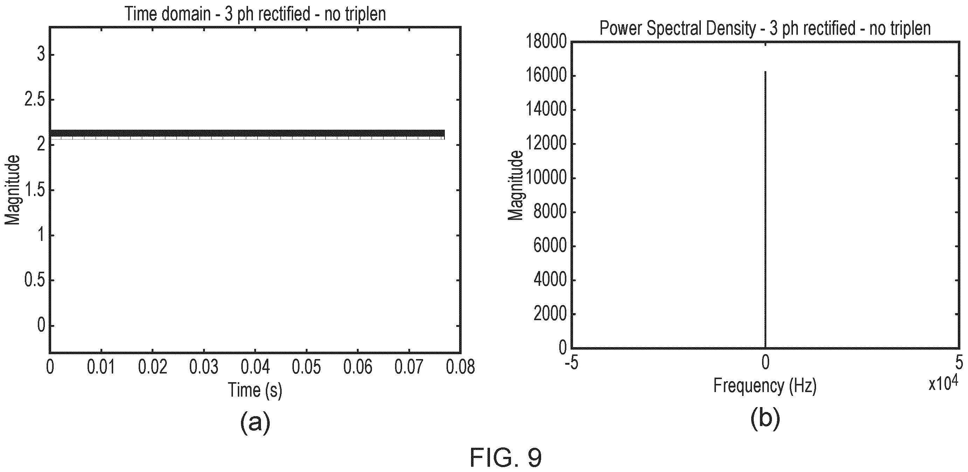

Although the harmonic content of the DC link voltage output by the arrangement of FIG. 7B is lower than output by the arrangement of FIG. 2, it may still benefit from active harmonic filtering by the active filter 14. The active filter 14 is of the same topology as that described above, and the flow chart of FIG. 5 may be applied in the same way to determine an output voltage, $v_{out}$, for filtering the harmonics. Chart (a) of **FIG. 9** shows the rectified three-phase output after filtering, while the power spectrum of chart (b) confirms the significant reduction in harmonic content.

In each of the above examples, the electrical machine 12 is a three-phase machine. However, this need not be the case and the present disclosure may be extended to electrical machines having a different number of phases (e.g., four), with diode-bridge rectifiers 13 configured to rectify said different number of phases (e.g., a four-phase full-wave diode-bridge rectifier, or four one-phase full-wave diode-bridge rectifiers).

In each of the above examples, the active filter circuit 14 filters harmonics of an order satisfying $6nf_0$. Depending on the needs of the system (e.g., which harmonics contribute most to the total harmonic distortion), the active filter circuit 14 may filter additional or alternative harmonics. Different harmonics may dominate if, for example, the electrical machine produces a more sinusoidal back-emf.

As noted previously, the electrical machine 12 may be configured to output a trapezoidal or quasi-trapezoidal back-emf. A trapezoidal EMF can be generated through a combination of winding design and magnet pole shaping, and a nonlimiting example electrical machine 12 is illustrated in **FIG. 10A**. Trapezoidal back-emfs produced by the machine 12 of FIG 10A are shown in **FIG 10B**. The electrical machine 12 comprises a rotor 121 and a stator 122 radially surrounding the rotor 121. The stator 122 comprises a plurality of teeth 123. A respective stator coil (B, R, C) is wound around each stator tooth 123. The stator 122 in this example comprises a cross-sectional geometry of 12 slots and 8 poles. This is a concentrated winding geometry, in contrast to a distributed winding geometry in which a coil spans more than one tooth. This design of machine 12 produces a trapezoidal back-emf, as illustrated for each phase (B, R, C) in FIG. 10B. Further shaping of these trapezoidal back-EMFs, if required, could be achieved by optimisation of the magnet pole shapes.

As noted previously, the electrical machine 12 and the diode-bridge rectifier 13 of FIG. 1 (and the embodiments of FIGS. 2 and 7A-B) may be provided together as a common arrangement 11. With the reduced harmonic content provided by the active filter 14, the converter 13 may not require such a large DC link capacitor or indeed passive R-L-C filters, so integration of the electrical machine 12 and the converter 13 may be more readily realized. This is illustrated in **FIGS. 11A-11B**, which show an electrical machine 12 and a diode-bridge rectifier 13 integrated together. In this example the diode-bridge rectifier 13 is affixed to the casing 125 of the electrical machine 12. In other examples, the electrical machine 12 and a diode-bridge rectifier 13 may be provided within a common casing, or the diode-bridge rectifier 13 may be arranged within or affixed to an endplate of the electrical machine 12. The AC harness 111 and the DC harness 112 are also shown. Here, the harnesses 111, 112 are shown to connect into the input and output of the diode-bridge rectifier 13. However, the AC harness may instead be routed internally onto the diode bridge to provide a more compact solution. FIG. 11B further shows fins 113 in the casing 125 of the electrical machine 12 and/or rectifier 13 to improve heat rejection.

**FIG. 12A** illustrates a variant of the active filter circuit 14 in which a lumped inductance $L_{out}$ is fitted at the output. Providing the additional inductance $L_{out}$ may improve the control of the output current.

**FIG. 12B** illustrates another variant in which an active filter circuit 14 includes a plurality (an integer number N) of active bridge circuits 140A, 140B, ... , 140N connected in parallel across common output terminals. Once again, full-bridge circuits are illustrated but other active bridge circuits may be used instead.

Utilizing a plurality of parallel active bridge circuits, the current across each active bridge circuit is reduced by a factor of N (i.e., the current it is I1/N). The total conduction losses are reduced by a factor of N, as each of the N parallel-connected electronic impedances dissipate $1/N^2$ of the conduction power losses that would be dissipated by one equivalent electronic impedance. Further, due to the linear dependency of the switching losses with switching frequency, input voltage (drain-to-source voltage for a MOSFET) and conducted current, reducing the conducted current by a factor of N in each of the parallel branches allows for an increase of the switching frequency by the same factor (N), assuming constant switching losses per active bridge circuit 140.

Faster switching the power semiconductor switches $141_{L,H}$, $142_{L,H}$ of the active filter 14 improves the time-continuity of the presented waveform. Thus, by utilizing a plurality of parallel-connected active bridge circuits, 140a, 140b, ..., 140N, the time-continuity of the waveform may be improved further, and/or a larger range of harmonics may be filtered without unacceptable degradation of the waveform. Further, in some instances the magnitude of the current may be a limiting factor in determining whether the active filter 14 can filter a given harmonics due to, e.g., the current ratings of the power semiconductor switches $141_{L,H}$, $142_{L,H}$. Increasing the number of parallel-connected active bridge circuits, and thus reducing the current across each active bridge circuit, may relax this limitation.

The switching operation of each of the plurality of parallel-connected active bridge circuits may be synchronized in time (i.e., if power semiconductor switch $141_L$ of bridge circuit 140A is switched on, the semiconductor switch $141_L$ of all other bridge circuits 140B, ..., 140N are switched on at the same time). In other examples, however, the switching operation of the parallel-connected active bridge circuits 140A-N may be time-interleaved.

In a first example of time-interleaved switching, the switching operation of each individual one of the active bridge circuits 140A, 140B, ... , 140N is temporally offset from the others so that each active bridge circuit has a unique switching period within each fundamental frequency cycle. Time interleaving the switching of N active bridge circuits 140A, 140B, ... , 140N in this way emulates the fast switching of a single active bridge circuit. In other words, each one of the N active bridge circuits 140A, 140B, ... , 140N need not be switched any faster but, from the perspective of the external circuit, the active filter circuit 14 appears to be switching N times faster due to the staggered switching of the N active bridge circuits. Each active bridge circuit handles the full current I1 but for only a fraction, 1/N, of each fundamental cycle.

In a second example of time-interleaved switching, the N active bridge circuits 140A, 140B, ... , 140N are divided into P groups of Q active bridge circuits (i.e., P x Q = N). For a given one of the P groups, the switching operation of the Q active bridge circuits is synchronized. However, the switching operation of each of the P groups are time-interleaved so that each group of Q active bridge circuits has a unique switching period within each fundamental frequency cycle. From the perspective of the external circuit, the switching rate appears higher by a factor of P due to the staggered switching of the P groups. Using this approach, each active bridge circuit conducts only a fraction, 1/Q, of the total current I1. Reducing the current by a factor of Q allows the switching rate of the power semiconductor switches to be increased by a factor of Q. Thus, the overall increase in switching rate may be as a high as a factor of P x Q = N, as in the previous examples. However, compared with the first example of inter-leaved switching, the current that must be conducted by each active bridge circuit is lower (I1/Q rather than I1). Compared with the non-interleaved example, the rate at which the power semiconductor switches must be switched $141_{L,H}$, $142_{L,H}$ to achieve the factor of N increase is reduced by factor of Q. Thus, the second example may provide a balance between the requirements of the non-interleaved approach (reduced current but requiring a high semiconductor switching rate) and the first example of interleaved switching (no increase in semiconductor switching rate but high current per active bridge circuit).

**FIG. 12C** illustrates another variant in which the active filter circuit 14 includes a plurality (an integer number n) of active cells 140a, 140b, ..., 140n connected in series between output terminals. Each cell (e.g., cell 140a) may consist of a single active bridge circuit 140 or may comprise a plurality of active bridge circuits 140A, 140B, ... , 140N connected in parallel. Utilizing series-connected cells 140a-n may improve the ability of the active filter circuit 14 to filter harmonics. An optimal configuration for the desired application may be a combination of series- and parallel- connection of active bridge circuits.

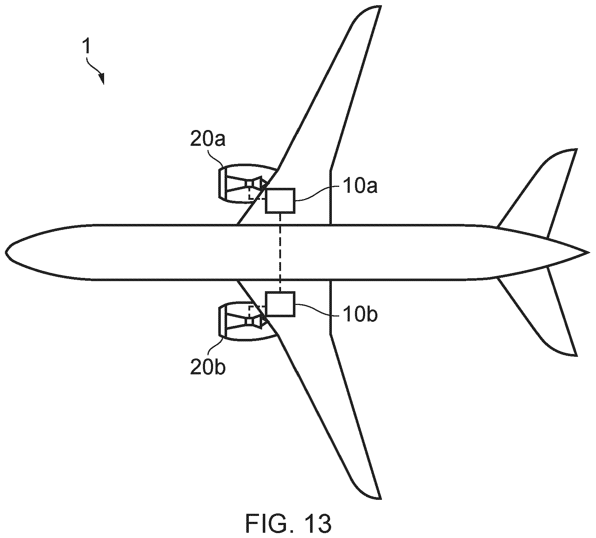

**FIG. 13** is a plan view of an aircraft 1. The aircraft comprises two gas turbine engines 20a, 20b and two electrical power systems 10a, 10b of the type described herein. The first electrical power system 10a may comprise a rotary electrical machine that is coupled to a shaft of a first of the gas turbine engines 20a. Likewise, the second electrical power system 10b may comprise a rotary electrical machine that is coupled to a shaft of a second of the gas turbine engines 20b. As illustrated by the dashed line, in this example, the two electrical power systems 10a, 10b may be electrically connected or connectable together. Other aircraft feature a different number of gas turbine engines, including zero, one, and three or more. The electrical power systems 10 described herein may be used in any type of aircraft.

It will be understood that the invention is not limited to the embodiments above-described and various modifications and improvements can be made without departing from the concepts herein. The invention has been described with reference to aerospace applications but could be used in other transport and non-transport applications. Except where mutually exclusive, any of the features may be employed separately or in combination with any other features and the disclosure extends to and includes all combinations and sub-combinations of one or more features described herein.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An electrical power system (10), comprising:

   a rotary electrical machine (12) configured to output AC;
   a diode-bridge rectifier (13) having an AC input connected to the electrical machine (12) and a DC output (DC+, DC-);
   an active filter circuit (14) comprising a plurality of power semiconductor switches ($141_{L-H}$, $142_{L-H}$) connected in a bridge configuration between first and second output terminals ($14_{out}$), the first and second output terminals connected to the DC output (DC+, DC-) of the diode-bridge rectifier (13); and

a controller (15) configured to control a switching operation of the plurality of power semiconductor switches ($141_{L-H}$, $142_{L-H}$) of the active filter circuit (14) to control an output voltage ($V_{out}$) across the first and second output terminals ($14_{out}$) of the active filter circuit (14).

2.   The electrical power system (10) of claim 1, wherein the rotary electrical machine (12) has an integer number $R \geq 3$ of phases and the diode-bridge rectifier (13) is an R-phase full-wave diode-bridge rectifier (13a).

3.   The electrical power system (10) of claim 2, wherein the rotary electrical machine (12) is configured to output an R-phase trapezoidal or quasi-trapezoidal voltage.

4.   The electrical power system (10) of claim 1, wherein the rotary electrical machine (12) has an integer number $R \geq 3$ of phases and the diode-bridge rectifier (13) comprises R single-phase full-wave diode-bridge rectifier circuits ($13b_{1-3}$) connected in series at their DC sides, an AC input of the r-th single-phase full-wave diode-bridge rectifier circuit being connected to an r-th phase of the electrical machine (12).

5.   The electrical power system (10) of claim 4, wherein R = 3 and the diode-bridge rectifier (13) comprises:

a first single-phase full-wave diode-bridge rectifier circuit ($13b_1$) having an AC input connected to a first phase of the electrical machine (12) and having first and second DC terminals ($DC_{1+}$, $DC_{1-}$), the first DC terminal ($DC_{1+}$) forming a first DC output (DC+) of the diode-bridge rectifier (13);

a second single-phase full-wave diode-bridge rectifier circuit ($13b_2$) having an AC input connected to a second phase of the electrical machine (12) and having third and fourth DC terminals ($DC_{2+}$, $DC_{2-}$), the third DC terminal ($DC_{2+}$) connected to the second DC terminal ($DC_{1-}$) of the first single-phase full-wave diode-bridge rectifier circuit ($13b_1$); and

a third single-phase full-wave diode-bridge rectifier circuit ($13b_3$) having an AC input connected to a third phase of the electrical machine (12) and having fifth and sixth DC terminals ($DC_{3+}$, $DC_{3-}$), the fifth DC terminal ($DC_{3+}$) connected to the fourth DC terminal ($DC_{2-}$) of the second single-phase diode-bridge rectifier ($13b_2$), and the sixth DC terminal ($DC_{3-}$) forming the second DC output (DC-) of the diode-bridge rectifier (13).

6.   The electrical power system (10) of any one of the preceding claims, further comprising a voltage sensor (V) configured to measure a voltage across the DC output (DC+, DC-) of the diode-bridge rectifier (13) and to provide the measured voltage to the controller (15), and wherein the controller (15) is configured to:

identify one or more harmonics to be filtered;

determine, from the measured voltage, an output voltage for filtering the one or more harmonics;

control the switching operation of the plurality of power semiconductor switches ($141_{L-H}$, $142_{L-H}$) of the active filter circuit (14) so that the output voltage ($V_{out}$) across the first and second output terminals ($14_{out}$) of the active filter circuit (14) is equal to the determined output voltage.

7.   The electrical power system (10) of claim 6, wherein determining the output voltage for filtering the one or more harmonics comprises:

determining, from the measured voltage, a harmonic content for each of the one or more harmonics; and

determining, based on the harmonic content of the one or more harmonics, the voltage output for filtering the one or more harmonics.

8.   The electrical power system (10) of claim 7, wherein determining the harmonic content for each of the one or harmonics comprises:

transforming the measured voltage from a time domain into a frequency domain and determining, for each of the harmonics, an amplitude and phase at a frequency of the harmonic.

9.   The electrical power system (10) of any one of claims 6 to 8, wherein identifying the one or more harmonics to be filtered comprises:

identifying one or more pre-defined harmonic frequencies in a look-up table; or

identifying one or more harmonic frequencies from the voltage measurement.

**10.** The electrical power system (10) of any one of the preceding claims, wherein:

the active filter circuit (14) comprises a plurality of active bridge circuits (140A, 140B, ..., 140N) connected in parallel between the first and second output terminals ($14_{OUT}$), each of the plurality of active bridge circuits (140A, 140B, ..., 140N) comprising a plurality of power semiconductor switches ($141_{L-H}$, $142_{L-H}$); and
the controller (15) is configured to control a switching operation of the plurality of power semiconductor switches ($141_{L-H}$, $142_{L-H}$) of each of the active bridge circuits (140A, 140B, ..., 140N) and thereby control the output voltage ($V_{out}$) across the first and second output terminals ($14_{out}$) of the active filter circuit (14).

**11.** The electrical power system (10) of claim 10, wherein the controller (15) is configured to time-interleave the switching operation of the plurality of active bridge circuits 140A, 140B, ..., 140N) of the active filter circuit (14).

**12.** The electrical power system (100) of any one of the preceding claims, wherein:

the active filter circuit (14) comprises a plurality of series-connected active bridge circuits (140a, 140b, ..., 140n), each of the plurality of series-connected active bridge circuits (140a, 140b, ..., 140n) comprising a plurality of power semiconductor switches ($141_{L-H}$, $142_{L-H}$); and
the controller (15) is configured to control a switching operation of the plurality of power semiconductor switches ($141_{L-H}$, $142_{L-H}$) of each of the plurality of series-connected active bridge circuits (140a, 140b, ..., 140n) and thereby control the output the output voltage ($V_{out}$) across the first and second output terminals ($14_{out}$) of the active filter circuit (14).

**13.** The electrical power system of any one of the preceding claims, wherein:

the active filter circuit comprises a plurality of series-connected cells (140an), each cell of the plurality of series-connecting cells (140a-n) comprising a plurality of parallel-connected active bridge circuits (140A-N), each of the plurality active bridge circuits comprising a plurality of power semiconductor switches ($141_{L-H}$, $142_{L-H}$); and
the controller (15) is configured to control a switching operation of the plurality of power semiconductor switches ($141_{L-H}$, $142_{L-H}$) of each of the plurality of active bridge circuits and thereby control the output voltage ($V_{out}$) across the first and second output terminals ($14_{out}$) of the active filter circuit (14).

**14.** The electrical power system (10) of any one of the preceding claims, wherein the rotary electrical machine (12) comprises a rotor (121) and a stator (122) provided within a casing (125), and wherein the diode-bridge rectifier (13) is connected to windings of the stator (122) within the casing.

**15.** The electrical power system of any one of the preceding claims, further comprising a DC electrical network (16) connected to the DC output (DC+, DC-) of the diode-bridge rectifier (13).

FIG. 1

FIG. 2

FIG. 3

FIG. 4

FIG. 5

Time domain - 3 ph rectified - no triplen

(a)

Power Spectral Density - 3 ph rectified - no triplen

(b)

FIG. 6

EP 4 633 021 A1

FIG. 7A

FIG. 7B

Time domain - 1 ph before rectification

(a)

Time domain - 1 ph rectified

(b)

Power Spectral Density - 1 ph rectified

(d)

Power Spectral Density - 3 ph rectified

(e)

Time domain - 3 ph rectified

(c)

FIG. 8

Time domain - 3 ph rectified - no triplen

(a)

Power Spectral Density - 3 ph rectified - no triplen

(b)

FIG. 9

EP 4 633 021 A1

FIG. 10A

FIG. 10B

FIG. 11A

FIG. 11B

FIG. 12A

FIG. 12B

FIG. 12C

FIG. 13

EP 4 633 021 A1

Europäisches
Patentamt

European
Patent Office

Office européen
des brevets

# EUROPEAN SEARCH REPORT

**Application Number**

EP 25 16 3304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SALMON J ET AL: "IMPROVING THE OPERATION OF 3-PHASE DIODE RECTIFIERS USING AN ASYMMETRICAL HALF-BRIDGE DC-LINK ACTIVE FILTER", CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000; [CONFERENCE RECORD OF THE IEEE INDUSTRY APPLICATIONS CO, vol. CONF. 35, 8 October 2000 (2000-10-08), pages 2115-2122, XP001042610, DOI: 10.1109/IAS.2000.883118 ISBN: 978-0-7803-6402-8 | 1,2,6-15 | INV. H02M1/12 H02M1/14 H02M1/15 H02M7/06 H02M7/10 |
| Y | * the whole document * | 3-5 | |
| Y | MUNOZ-GARCIA A ET AL: "Utilization of third harmonic-induced-voltages in PM generators", CONFERENCE RECORD OF THE 1996 IEEE INDUSTRY APPLICATIONS CONFERENCE - 31ST IAS ANNUAL MEETING, IEEE SERVICE CENTER, US, vol. 1, 6 October 1996 (1996-10-06), pages 525-532, XP010201169, DOI: 10.1109/IAS.1996.557083 ISBN: 978-0-7803-3544-8 * abstract * * figures 1,2 * | 3-5 | TECHNICAL FIELDS SEARCHED (IPC) H02M |

-/--

The present search report has been drawn up for all claims

| Place of search | Date of completion of the search | Examiner |
|---|---|---|
| The Hague | 18 August 2025 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 16 3304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GREEN T C ET AL: "Control techniques for active power filters", IEE PROCEEDINGS: ELECTRIC POWER APPLICATIONS, INSTITUTION OF ELECTRICAL ENGINEERS, GB, vol. 152, no. 2, 25 October 2004 (2004-10-25), pages 369-381, XP006023694, ISSN: 1350-2352, DOI: 10.1049/IP-EPA:20040759 * page 373 - page 374 * ----- | 6-9 | |
| A | JP 5 169017 B2 (MITSUBISHI ELECTRIC CORP) 27 March 2013 (2013-03-27) * figure 1 * ----- | 10-13 | |
| A | EP 2 595 291 B1 (SCHNEIDER TOSHIBA INVERTER EUROPE SAS [FR]) 8 April 2020 (2020-04-08) * figure 1 * ----- | 10-13 | |

**TECHNICAL FIELDS SEARCHED (IPC)**

The present search report has been drawn up for all claims

| Place of search | Date of completion of the search | Examiner |
|---|---|---|
| The Hague | 18 August 2025 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 3304

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2025

| Patent document cited in search report | | Publication date | Patent family member(s) | | Publication date |
|---|---|---|---|---|---|
| JP 5169017 | B2 | 27-03-2013 | JP | 5169017 B2 | 27-03-2013 |
| | | | JP | 2008289216 A | 27-11-2008 |
| EP 2595291 | B1 | 08-04-2020 | EP | 2595291 A1 | 22-05-2013 |
| | | | ES | 2793961 T3 | 17-11-2020 |
| | | | FR | 2982719 A1 | 17-05-2013 |
| | | | JP | 5518980 B2 | 11-06-2014 |
| | | | JP | 2013106519 A | 30-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4120532 A1